# FASCICULE DE BREVET EUROPEEN

(11) **EP 0 494 552 B1**
(45) Date de publication et mention de la délivrance du brevet: **25.05.1994**
(21) Numéro de dépôt: 91403024.2
(22) Date de dépôt: 12.11.1991
(51) Int. Cl.: B62D 25/20

(54) **Structure assemblée de plancher pour véhicules automobiles avec réservoir de combustible intégré**
Aufbau eines Kraftfahrzeugbodens mit integriertem Kraftstofftank
Structure of a motor vehicle bottom with integrated fuel tank

(30) Priorité: 08.01.1991 FR 9100142
(43) Date de publication de la demande: 15.07.1992
(73) Titulaire: REGIE NATIONALE DES USINES RENAULT S.A., 92109 Boulogne Billancourt Cédex (FR)
(72) Inventeur: Gros, Christian, F-78400 Chatou (FR); Elias, Bernard, F-78990 Elancourt (FR); Demaldent, Jean Michel, F-78500 Sartrouville (FR)
(74) Mandataire: Ernst-Schonberg, Michel

(56) Documents cités:
- EP-A- 0 066 963
- EP-A- 0 067 602
- DE-A- 3 720 946
- US-A- 4 255 482

## Description

L'invention concerne une structure assemblée de plancher pour véhicules automobiles avec réservoir de combustible intégré.

L'invention concerne plus particulièrement une structure assemblée de plancher formée par une première et par une seconde plaque assemblées qui possèdent des bords d'assemblage latéraux dans laquelle un tunnel longitudinal ouvert vers le bas est formé à partir d'une projection verticale des dites plaques.

La publication EP-A-0066963 décrit une structure dans laquelle le réservoir de combustible est protégé par le tunnel et son agencement augmente l'espace disponible derrière les sièges des occupants du véhicule. Mais dans les véhicules à traction avant ou à roues arrières motrices, la tubulure d'échappement et l'arbre de transmission traversent longitudinalement un tel tunnel qui ne peut plus contenir le réservoir de combustible.

Pour résoudre ce problème, l'invention concerne une structure dont les plaques constitutives du plancher sont respectivement assemblées à deux niveaux longitudinalement décalés et constituent respectivement les surfaces de support de sièges. Selon l'invention un élément transversal est assemblé à la deuxième plaque et possède un fond et une paroi transversale arrière longitudinalement décalée par rapport à une deuxième paroi transversale formée à l'aplomb du raccordement des niveaux de la structure.

Dans la structure ainsi réalisée le réservoir peut-être intégré dans l'élément transversal pour occuper une position centrale protégée sur le véhicule non dépendante de la partie postérieure de la structure assemblée.

La protection du réservoir peut être aisément assurée notamment contre les risques d'éclatement consécutifs aux efforts de compression longitudinaux et transversaux de la structure.

La protection transversale du réservoir est assurée par la caractéristique de la structure selon laquelle les bords d'assemblage latéraux de la première et de la deuxième plaque constitutives du plancher sont superposés de manière à constituer une succession de corps creux transversalement espacés et entretoisés par l'élément transversal support d'un réservoir indépendant ou d'un volume de réception du carburant délimité par les parois mêmes de la structure.

La structure assemblée de plancher permet en outre de résoudre le problème de la filtration des bruits de roulage lors du déplacement du véhicule. A cet effet les plaques délimitent une cavité d'injection d'un agent d'isolation phonique ou thermique.

D'autres caractéristiques et avantages de l'invention apparaitront à la lecture d'un exemple de réalisation de la structure de plancher assemblée en référence au dessin annexé dans lequel:

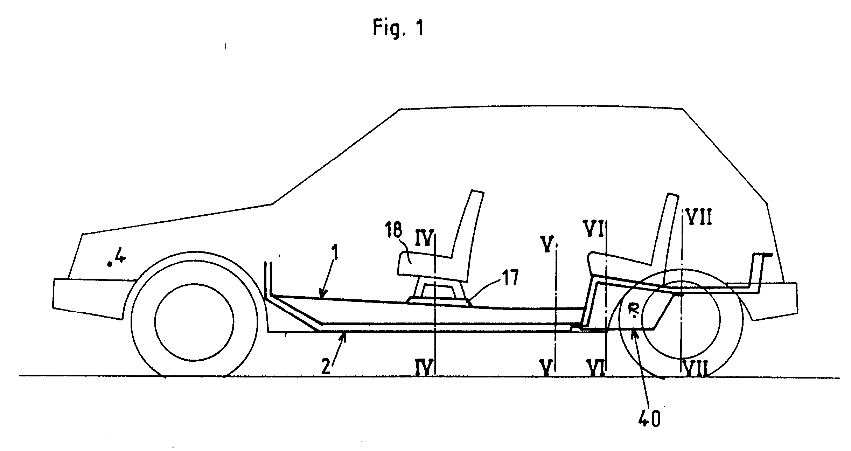

- la figure 1 est une représentation schématique d'une section longitudinale d'un véhicule porteur de la structure de plancher conforme à l'invention.
- la figure 2 est une vue en perspective des composants de la structure avec coupe longitudinale des plaques constitutives du plancher et du fond rapporté.
- la figure 3 est une vue en perspective de la partie droite de la structure assemblée du plancher.

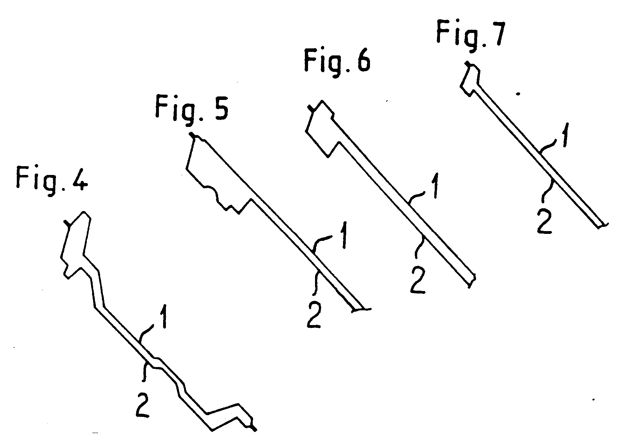

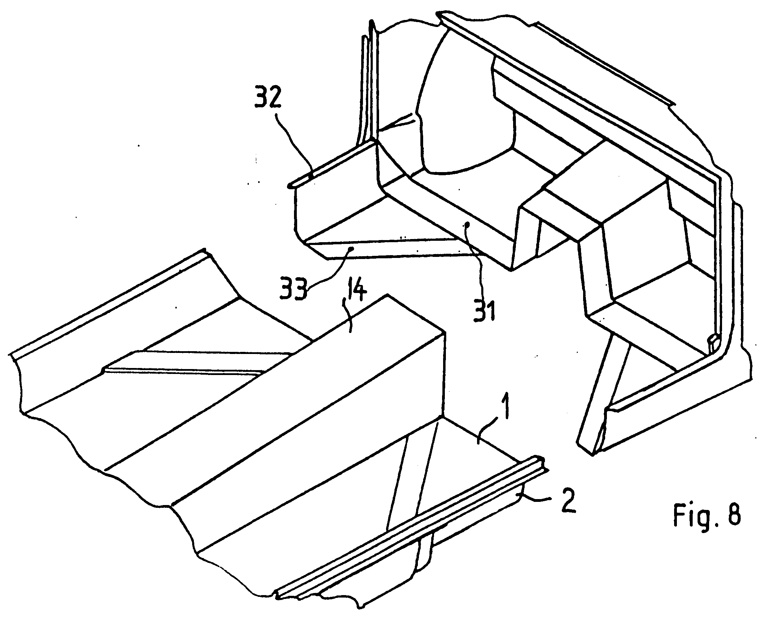

- les figures 4 à 7 sont des vues en coupes transversales de la structure de plancher selon les lignes IV-IV ; V-V ; VI-VI et VII-VII de la figure 1.
- la figure 8 est une vue en perspective de la partie avancée de la structure de plancher et de la zone d'assemblage avec la structure avant du véhicule.
- la figure 9 est une vue en perspective de la zone assemblée du plancher avec la structure avant du véhicule.
   Ainsi que cela est montré à la figure 1, la structure de plancher formée par une première plaque 1 alvéolée et par une seconde plaque 2 alvéolée est raccordée à la partie postérieure de la structure avant du véhicule. Dans la structure avant est aménagé le logement 4 d'un groupe moto-propulseur.

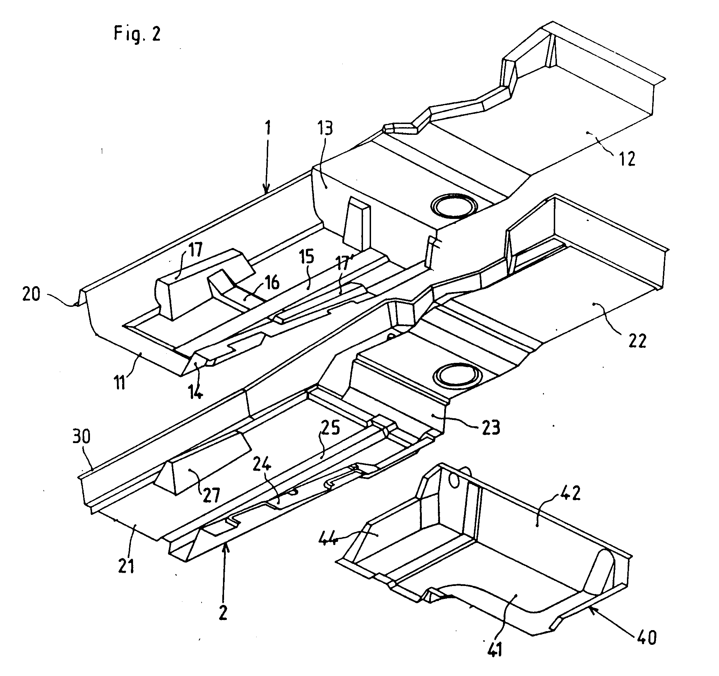

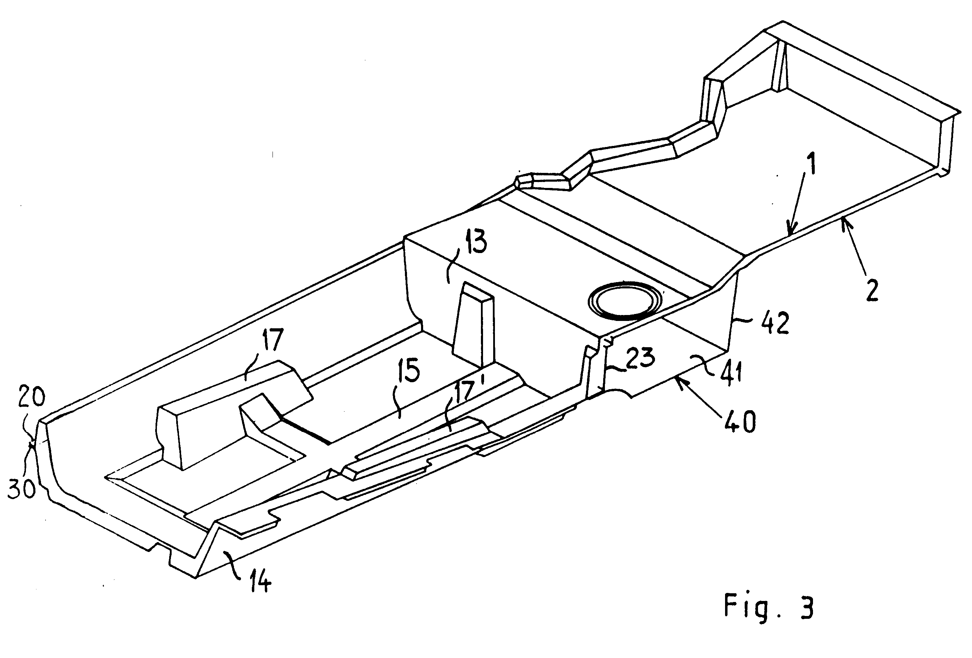

Ainsi que cela est montré aux figures 2 et 3, les plaques 1 et 2 sont destinées à constituer une structure assemblée par encastrement mutuel et superposition, dans laquelle peut être déposé un agent d'isolation phonique et/ou thermique.

La plaque 1 possède une partie avant 11 et une partie arrière 12 situées à des niveaux différents raccordées par une paroi sensiblement verticale 13. Les parties avant et arrière possèdent une configuration générale en cuvette à bords latéraux d'assemblage 20. La partie avant 11 possède un tunnel longitudinal 14 ouvert vers le bas qui est formé par une projection verticale de la plaque 1.

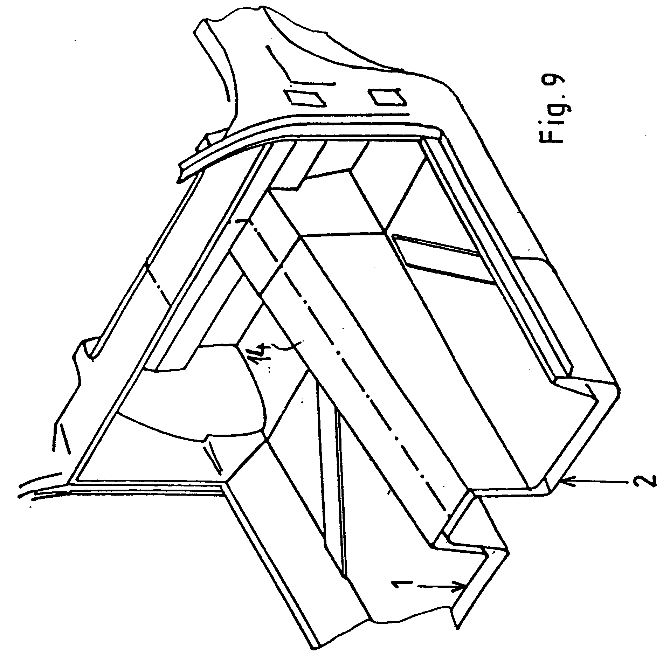

La partie avant 11 possède par ailleurs une nervure longitudinale 15 de rigidification et un renfort transversal 16 qui se raccorde par exemple à des zones de support latérales 17, 17′ inclinées destinés à la réception de glissières ou de tout autre des moyens de fixation des sièges avant 18 du véhicule. Les zones de support 17, 17′ peuvent être matérialisées à titre d'exemple par des nervures ou des renforts localisés de la structure de rigidification latérale du plancher. La partie avant 11 possède également des zones de centrage, de positionnement et d'assemblage avec les zones correspondantes 31, 32, 33 de la structure avant du véhicule. De telles zones sont respectivement représentées à la figure 8.

Les bords d'assemblage latéraux 20 de la plaque 1 sont agencés sur la paroi intérieure d'un tunnel dont l'ouverture est dirigée vers le bas et font partie d'un corps creux constitutif de la poutre longitudinale de rigidification de la structure.

Les figures 2 et 3 mettent également en évidence que la structure de plancher possède un plan de symétrie longitudinal qui sépare les parties gauche et droite de la structure.

Ainsi que cela vient d'être dit pour la plaque 1, la plaque 2 possède également une partie avant 21 et une partie arrière 22 situées à des niveaux différents, raccordées par une paroi sensiblement verticale 23. On retrouve de même sur la plaque 2 une configuration générale en cuvette à bords latéraux d'assemblage destinés à la confection de la structure creuse latérale de rigidification.

Ainsi que cela est représenté à la figure 3, les plaques 1 et 2 sont encastrées et assemblées le long des bords d'assemblage 20. A cet effet la plaque 2 possède également un bord d'assemblage 30 qui limite la paroi latérale de la cuvette dont le fond porte le renfort 27 du support 17 du siège et les renforts longitudinaux 24, 25 du tunnel 14 et de la nervure 15.

Les nervures 15 et les renforts 25 longitudinalement encastrés constituent une rainure de passage de canalisations et de câbles.

Un élément transversal 40 qui possède des parois latérales relevées 44 est assemblé avec la deuxième plaque 2. L'élément transversal montré plus en détail à la figure 2 est réalisé par un fond 41 qui peut supporter à titre d'exemple non limitatif un réservoir de combustible R indépendant ou faire partie de ce même réservoir.

Le fond 41 est raccordé à une paroi transversale arrière 42 qui peut constituer selon une variante de réalisation de l'invention une butée du réservoir R longitudinalement décalée par rapport à une deuxième paroi transversale 23 de butée formée à l'aplomb des raccordements des parties avant et arrière 11, 12 - 21, 22 des plaques 1, 2 de la structure. Mais ces mêmes parois 42, 23 peuvent faire partie du réservoir, lorsque ce dernier est intégré à la structure de plancher.

La fixation du réservoir R sur l'élément transversal 40 s'opère par tout moyen connu incluant par exemple des cales et des boulons afin de constituer un module de montage préassemblé destiné à être fixé sur la structure assemblée des plaques 1,2.

Il est toutefois possible de réaliser une cavité de réception du combustible qui remplit la fonction de réservoir par combinaison des différentes parois de la structure. A cet effet la partie inférieure de la deuxième plaque 2, les parois latérales opposées relevées 44 de l'élément transversal 40 constituent l'ensemble des parois du réservoir. Ce dernier et notamment le fond 41 sont situés sous la partie de la structure destinée à supporter une rangée de sièges.

La structure ainsi réalisée utilise avantageusement des éléments plastiques moulés et isole la partie fonctionnelle de la structure constitutive du réservoir de l'habitacle du véhicule en la plaçant à l'avant de la zone de fixation de l'essieu arrière du véhicule.

La structure assemblée permet aussi une réduction significative du poids du plancher et possède une bonne résistance aux efforts de torsion et une isolation acoustique compatible avec les exigeances les plus sévères.

## Revendications

1. Structure assemblée de plancher pour véhicules automobiles avec un réservoir de combustible intégré formée par une première et par une seconde plaque (1. 2) assemblées qui possèdent des bords d'assemblage (20. 30) latéraux et dans laquelle un tunnel (14) longitudinal ouvert vers le bas est formé à partir d'une projection verticale des dites plaques (1, 2) respectivement assemblées à deux niveaux différents pour constituer des surfaces de support de sièges, caractérisée par le fait qu'un élément transversal (40) assemblé à la deuxième plaque (2) possède un fond (41) et une paroi transversale (42) arrière longitudinalement décalée par rapport à une deuxième paroi transversale (23) formée à l'aplomb du raccordement des niveaux de la structure.

2. Structure selon la revendication 1, caractérisée par le fait que l'élément transversal (40) et le réservoir (R) constituent une unité de montage préassemblée.

3. Structure selon l'une quelconque des revendications 1 ou 2, caractérisée par le fait que la partie avant (11) de la première plaque possède des zones de support latérales (17, 17′) destinées à la réception de moyens de fixation de sièges du véhicule.

4. Structure selon l'une quelconque des revendications 1 à 3 caractérisée par le fait que la première et la seconde plaque (1, 2) portent respectivement une nervure (15) et un renfort (25), longitudinalement encastrés constitutifs d'une rainure de passage de composants du véhicule.

5. Structure selon l'une quelconque des revendications 1 à 4, caractérisée par le fait que la première et la seconde plaque délimitent une cavité de réception d'un agent d'isolation phonique et/ou thermique.

6. Structure selon l'une quelconque des revendications 1, 2 caractérisée par le fait, que le fond (41) de l'élément transversal (40) est situé sous la partie support d'une rangée de sièges du véhicule.

7. Structure selon l'une quelconque des revendications 1 à 6, caractérisée par le fait que la partie inférieure de la deuxième plaque (2) délimite conjointement avec l'élément transversal les parois du réservoir (R) de combustible.

## Patentansprüche

1. Bodengruppe für Kraftfahrzeuge mit integriertem Kraftstofftank, bestehend aus einer ersten und einer zweiten zusammengebauten Platte 1, 2, welche seitliche Einbauränder 20, 30 besitzen, wobei ein nach unten offener Längstunnel 14 gebildet ist, ausgehend von einem senkrechten Vorsprung, der auf zwei verschiedenen Höhen zusammengebauten Platten 1, 2 zur Ausbildung von Sitz-Stützflächen, dadurch gekennzeichnet, daß ein, mit der zweiten Platte 2 zusammengebautes Querteil 40 einen Boden 41 und eine rückwärtige Querwand 42 aufweist, die in Längsrichtung bezüglich einer zweiten Querwand 23 verschoben ist, die als senkrechte Verbindung der Höhen der Gruppe ausgebildet ist.

2. Gruppe nach Anspruch 1, dadurch gekennzeichnet, daß das Querteil 40 und der Tank R eine vorgefertigte Montageeinheit bilden.

3. Gruppe nach einem der Ansprüche 1 oder 2, dadurch gekennzeichnet, daß der vordere Abschnitt 11 der ersten Platte seitliche Stützbereiche 17, 17′ aufweist, zur Aufnahme einer Befestigungsanordnung für die Fahrzeugsitze.

4. Gruppe nach einem der Ansprüche 1 bis 3, dadurch gekennzeichnet, daß die erste und die zweite Platte 1, 2 jeweils eine Rippe 15 und eine Verstärkung 25 aufweisen, die in Längsrichtung ineinander greifen, und einen Durchlaßraum für Fahrzeugteile bilden.

5. Gruppe nach einem der Ansprüche 1 bis 4, dadurch gekennzeichnet, daß die erste und die zweite Platte einen Aufnahmeraum für ein akustisches und/oder thermisches Isolationsmaterial begrenzen.

6. Gruppe nach einem der Ansprüche 1 oder 2, dadurch gekennzeichnet, daß der Boden 41 des Querteils 40 unterhalb des Stützbereichs einer Sitzreihe vorgesehen ist.

7. Gruppe nach einem der Ansprüche 1 bis 6, dadurch gekennzeichnet, daß der untere Abschnitt der zweiten Platte 2 zusammen mit dem Querteil die Wände eines Kraftstofftanks R bilden.

## Claims

1. Assembled floor structure for motor vehicles with an integrated fuel tank formed by a first and a second plate (1, 2) which are assembled and comprise lateral assembly edges (20, 30) and in which a downwardly open longitudinal tunnel (14) is formed from a vertical projection of the plates (1, 2) assembled respectively at two different levels in order to form seat support surfaces, characterized in that a transverse member (40) mounted on the second plate (2) comprises a base (41) and a rear transverse wall (42) longitudinally offset with respect to the second transverse wall (23) formed plumb with the junction of the levels of the structure.

2. A structure as claimed in claim 1, characterized in that the transverse member (40) and the tank (R) form a pre-assembled unit.

3. A structure as claimed in any one of claims 1 or 2, characterized in that the front portion (11) of the first plate comprises lateral support zones (17, 17′) adapted to receive means for fastening vehicle seats.

4. A structure as claimed in any one of claims 1 to 3, characterized in that the first and the second plate (1, 2) respectively bear a longitudinally embedded rib (15) and reinforcement (25) forming a groove for the passage of vehicle components.

5. A structure as claimed in any one of claims 1 to 4, characterized in that the first and the second plate bound a cavity receiving a sound and/or heat insulating agent.

6. A structure as claimed in any one of claims 1 and 2, characterized in that the base (41) of the transverse member (40) is disposed below the support portion of a row of vehicle seats.

7. A structure as claimed in any one of claims 1 to 6, characterized in that the lower portion of the second plate (2) bounds, jointly with the transverse member, the walls of the fuel tank (R).
